# EUROPÄISCHE PATENTSCHRIFT

(11) **EP 1 037 795 B1**
(45) Veröffentlichungstag und Bekanntmachung des Hinweises auf die Patenterteilung: **27.03.2002**
(21) Anmeldenummer: 98962394.7
(22) Anmeldetag: 25.11.1998
(51) Int. Cl.: B62M 23/02, B62B 5/00

(54) **STEUERUNG FÜR AUF MUSKEL- UND MOTORKRAFT GESTÜTZTE ANTRIEBE**
CONTROL FOR A MUSCLE OR MOTOR-POWERED DRIVE
COMMANDE POUR ENTRAINEMENTS AVEC L'ASISTANCE DE LA FORCE MUSCULAIRE ET DE L'ENERGIE D'UN MOTEUR

(30) Priorität: 12.12.1997 DE 19755309
(43) Veröffentlichungstag der Anmeldung: 27.09.2000
(73) Patentinhaber: Strothmann, Rolf, 66123 Saarbrücken (DE)
(72) Erfinder: Strothmann, Rolf, 66123 Saarbrücken (DE)
(74) Vertreter: Bernhardt, Winfrid, Dr.-Ing.
(86) Internationale Anmeldenummer: EP9807587
(87) Internationale Veröffentlichungsnummer: WO9930959

(56) Entgegenhaltungen:
- EP-A- 0 734 945
- WO-A-95/03096
- WO-A-96/32314
- US-A- 5 664 636

## Beschreibung

Die Erfindung betrifft eine Steuerung für einen Motorantrieb einer durch Muskelantriebskraft sowie unterstützend durch den Motorantrieb bewegbaren, insbesondere fahrbaren Vorrichtung, mit einer kinematische Größen der bewegten Vorrichtung erfassenden, Motorantriebssteuersignale erzeugenden Einrichtung zur Einstellung des Ausmaßes der Unterstützung des Muskelkraftantriebs durch den Motorantrieb basierend ausschließlich auf den erfaßten kinematischen Größen.

Sowohl auf Muskel- als auch Motorkraft gestützte Antriebe sind von fahrbaren Vorrichtungen wie Fahrrädern oder Golfkarren bekannt. Dabei wird der Motorantrieb unterstützend wirksam, indem er z.B. einen über eine durch Muskelkraft aufzubringende Grundlast hinausgehenden Teil der insgesamt erforderlichen Antriebskraft übernimmt. Die insgesamt erforderliche Antriebskraft ergibt sich aus dem Verhalten des Nutzers der fahrbaren Vorrichtung, welcher z.B. beschleunigen oder/und unter verschiedenen, durch unterschiedliche Steigungs- und Bodenverhältnisse gekennzeichneten Fahrbahnbedingungen eine bestimmte Geschwindigkeit einhalten will.

Eine aus der WO 95/03096 bekannte Steuerung eines solchen sowohl auf Muskel- als auch Motorkraft gestützten Antriebs für eine fahrbare Vorrichtung basiert auf einer ständigen Messung der ausgeübten Muskelantriebskraft und einer Einregelung der gemessenen Antriebskraft auf einen vorgegebenen Wert. Im Rahmen dieser Einregelung wird die fahrbare Vorrichtung durch die Motorantriebskraft derart nachgeführt, daß der Nutzer einen konstanten, diesem Wert und damit der Grundlast entsprechenden Antriebswiderstand verspürt.

Die US-A-5,664,636 beschreibt eine Steuerung für einen elektrischen Hilfsantrieb eines pedalgetriebenen Fahrzeugs, bei welcher die genannte, Motorantriebssteuersignale erzeugende Einrichtung neben der Geschwindigkeit des Fahrzeugs laufend die Pedalkraft ermittelt. Die Unterstützung durch den Hilfsantrieb wird anhand einer gespeicherten Nachschlagetabelle eingestellt, in welcher gewünschte Antriebskräfte in Zuordnung zur Fahrgeschwindigkeit und Pedalkraft gespeichert sind.

Steuerungen der eingangs erwähnten Art, bei denen die Erzeugung von Motorantriebssteuersignalen ausschließlich anhand der erfaßten kinematischen Größen erfolgt, gehen aus der EP 0 734 945 A1 sowie der WO 96/32314 hervor. Die aus der EP 0 734 945 A1 bekannte Steuerung für einen Motorantrieb eines Fahrrades weist einen Beschleunigungssensor auf, der durch einen Geschwindigkeitssensor und eine Differentiationseinrichtung gebildet sein kann. Entsprechend ermittelten Beschleunigungswerten werden Motorantriebssteuersignale gebildet, welche für eine Änderung der Antriebsunterstützung durch den Motorantrieb sorgen, so daß die während des Zeitraums der Beschleunigung des Fahrrades erforderliche Pedalantriebskraft reduziert ist. Zur Änderung der Antriebsunterstützung wird das Schaltverhäitnis des unter Impulsweitenmodulation betriebenen Antriebsmotors variiert. In der aus der WO 96/32314 bekannten Steuerung wird die Geschwindigkeit eines durch Muskel- und Motorantriebskraft bewegten Fahrzeugs ständig ermittelt und die Motorantriebskraft entsprechend einer gespeicherten funktionalen Beziehung zwischen Motorantriebskraft und Geschwindigkeit des Fahrzeugs eingestellt.

Durch die vorliegende Erfindung wird eine neue Steuerung der eingangs erwähnten Art geschaffen, bei der sich die genannten kinematischen Größen auf eine Bewegungskomponente beziehen, die auf einer dem Muskelkraftantrieb immanenten periodischen Schwankung der ausgeübten Muskelantriebskraft oder/und einer Änderung der ausgeübten Muskelantriebskraft in Reaktion auf eine bestimmte Änderung der Motorantriebskraft oder Motorantriebsgeschwindigkeit beruht.

Vorzugsweise ist die genannte Einrichtung zur Erzeugung von Motorantriebssteuersignalen entsprechend einer gewünschten Unterstützung oder Ablösung des Muskelkraftantriebs durch den Motorkraftantrieb vorgesehen, wobei eine Unterstützung entsprechend einem gewünschten Anteil der Motorkraft an der Gesamtantriebskraft oder entsprechend einer ggf. einstellbaren konstanten, durch Muskelkraftantrieb aufzubringenden, Grundlast erfolgen kann.

In einer bevorzugten Ausführungsform der Erfindung ist die genannte Einrichtung zur Erfassung und Auswertung von Zeitfunktionen kinematischer Größen vorgesehen und weist insbesondere eine die Zeitfunktionen auswertende, eine Differentationseinrichtung umfassende Analyseneinrichtung auf. Entsprechend dieser Ausführungsform könnte z.B. eine Weg-Zeit-Funktionen oder Geschwindigkeits-Zeit-Funktionen erfassende Einrichtung vorgesehen sein, wobei ggf. Beschleunigungs-Zeit-Funktionen und Zeitfunktionen höherer Ableitungen mit Hilfe der Differentationseinrichtung gebildet werden.

Bei dem Muskelkraftantrieb kann es sich z.B. um einen Tretantrieb für ein Fahrrad handeln, bei dem unter Betätigung einer Pedalkurbeleinrichtung eine kreisende Antriebsbewegung erfolgt. Entsprechend den Verhältnissen der Muskelkrafterzeugung und -übertragung schwankt bei einem solchen Antrieb die auf die Pedale übertragbare Antriebskraft, welche in vertikaler Stellung der Pedalkurbeln ein Minimum und in horizontaler Stellung der Pedalkurbeln ein Maximum erreicht. Entsprechend dieser schwankenden Antriebskraft weist das durch den Muskelkraftantrieb erzeugte Beschleunigungs- oder/und Geschwindigkeitsprofil des Fahrrads eine periodische Komponente auf. Die Amplituden der periodischen Komponente hängen von der mittleren Tretkraft ab.

Eine solche periodische Komponente entsteht aber auch bei einem Muskelkraftantrieb, bei dem eine Laufbewegung unter Ausübung einer z.B. auf eine fahrbare Vorrichtung übertragenen Zug- oder Schubkraft erfolgt. Entsprechend den sich durch die Laufbewegung ändernden Krafferzeugungs- und -übertragungsverhältnissen kommt es zu einem periodischen Anwachsen und Abfallen der Zug- oder Schubkraft, wobei diese Schwankungen aufgrund einer zunehmenden festeren Kopplung durch die Muskelspannung umso größer sind, je größer die übertragene Zug- oder Schubkraft im Mittel ist.

Zur Erzeugung von Steuersignalen kann die genannte Einrichtung die Amplituden der periodischen Komponente des Geschwindigkeits- oder/und Beschleunigungsprofils auswerten, wobei in die Auswertung auch eine der periodischen Komponente überlagerte mittlere Geschwindigkeit oder/und Beschleunigung einbeziehbar ist. Bei dieser Auswertung werden die Amplituden vorzugsweise mit einer vorbestimmten gespeicherten Amplitude verglichen. wobei die gespeicherte Amplitude entsprechend einer durch Muskelkraftantrieb aufzubringenden Grundlast ausgewählt sein kann.

Sofern die Signalbildung mit dem Ziel erfolgt, daß eine bestimmte Grundlast durch Muskelkraft aufgebracht wird, kann die Steuersignalerzeugung durch die genannte Einrichtung unter Einregelung der Amplitude der periodischen Komponente des erfaßten Geschwindigkeitsprofils auf die vorbestimmte Amplitude erfolgen.

In einer weiteren Ausführungsform der Erfindung ist der Erfassung kinematischer Größen ein vorbestimmtes Modell des Antriebsverhaltens eines die Muskelantriebskraft aufbringenden Benutzers der Vorrichtung zugrundegelegt. Bei einem solchen Verhaltensmodell kann es sich z.B. um in bestimmten Antriebssituationen typische Antriebsbewegungen handeln, wie z.B. eine durch Muskelkraft bewirkte Anfahrbewegung der fahrbaren Vorrichtung. In Reaktion auf eine solche Anfahrbewegung, die durch Vergleich mit entsprechenden gespeicherten Bewegungsabläufen ermittelbar ist, können Steuersignale zur geeigneten Aktivierung des Motorantriebs gebildet werden.

Bei dem Verhaltensmodell handelt es sich um ein Reaktionsmodell, das sich bei vorbestimmten Änderungen des Antriebs durch den Motorantrieb ergibt, wobei die vorbestimmten Änderungen des Antriebs z.B. in einem allmählichen Ansteigen oder Abfallen der Motorantriebskraft oder Antriebsgeschwindigkeit bestehen können und wobei die genannte Einrichtung zur Umschaltung von Anstieg auf Abfall der Motorantriebskraft bzw. -geschwindigkeit bei Auftreten einer Verzögerung und zur Umschaltung von Abfall auf Anstieg bei Auftreten einer Beschleunigung der Bewegung der angetriebenen Vorrichtung vorgesehen ist. Bei einer solchen Steuerung gehl man davon aus, daß bei Ansteigen z.B. der Motorantriebskraft der Benutzer die Muskelkraft so lange entsprechend verringert, wie er eine Unterstützung durch den Motorantrieb wünscht. Verringert der Benutzer die Muskelantriebskraft nicht mehr entsprechend in dem Maße. wie die Motorantriebskraft ansteigt, so kommt es zu einer Beschleunigung, woraus ableitbar ist, daß der Benutzer die bis zum Auftreten der Beschleunigung angewachsene Motorantriebskraft für wünschenswert hält. Fällt umgekehrt dann die Motorantriebskroft wieder allmählich ab, so kommt es zu einer negativen Beschleunigung der fahrbaren Vorrichtung, wenn der Benutzer die Muskelantriebskraft nicht entsprechend erhöht, woraus die genannte Einrichtung schließen kann, daß die bis zum Auftreten der negativen Beschleunigung erreichte Motorantriebskraft der gewünschten Antriebskraft entspricht. Auf diese Weise stellt sich automatisch die jeweils vom Benutzer der fahrbaren Vorrichtung gewünschte Antriebsunterstützung ein.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1: eine schematische Darstellung einer erfindungsgemäßen Steuerung,
- Fig. 2: durch die Steuerung von Fig. 1 erfaßbare und zur Bildung von Motorantriebssteuersignalen auswertbare Geschwindigkeits- und Beschleunigungsprofile,
- Fig. 3: weitere durch die erfindungsgemäße Steuerung von Fig. 1 auswertbare Geschwindigkeits- und Beschleunigungsprofile,
- Fig. 4: eine die Bildung der Profile von Fig. 2 und 3 erläuternde Darstellung, und
- Fig. 5: ein Diagramm zur Erläuterung eines Ausführungsbeispiels für die erfindungsgemäße Steuerung.

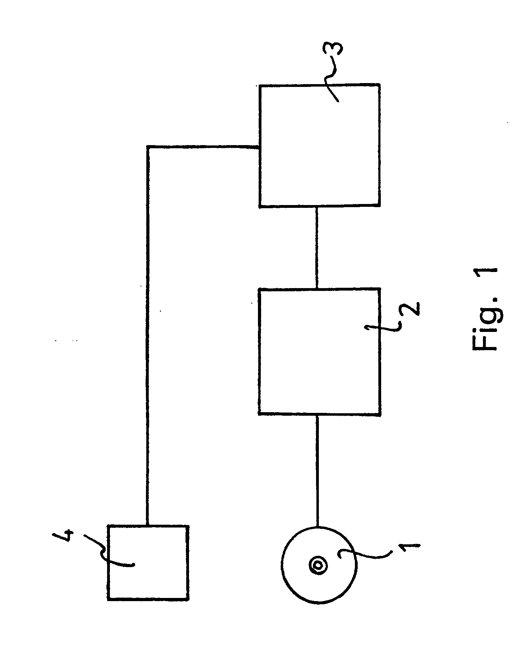

In der Fig. 1 ist mit dem Bezugszeichen 1 ein Antriebsmotor einer im übrigen nicht dargestellten fahrbaren Vorrichtung, wie z.B. eines Fahrrads oder eines Golfkarrens, bezeichnet. Der Motor 1 wird von einer eine Batterie umfassenden Leistungsansteuerung 2 gespeist, welche von einer Einrichtung 3 gebildete Steuersignale empfängt. Die Steuersignalbildungseinrichtung 3 steht in Verbindung mit einer Geschwindigkeitsmeßeinrichtung 4.

Die Geschwindigkeitsmeßeinrichtung 4 umfaßt in dem gezeigten Ausführungsbeispiel einen Positionsveränderungen der fahrbaren Vorrichtung erfassenden Impulsgeber, welcher Impulse in einer zum Drehwinkel der Welle des Antriebsmotors 1 proportionalen Anzahl erzeugt. Die Geschwindigkeitsmeßeinrichtung 4 umfaßt ferner einen Zeitmesser und eine Berechnungseinrichtung, um aus gemessenen Impulszahlen und Zeiten Drehgeschwindigkeiten der Antriebswelle zu berechnen, welche proportional zur Translationsgeschwindigkeit der genannten fahrbaren Vorrichtung sind. Die Zeitmeßeinrichtung und die Berechnungseinrichtung sowie die Steuersignalbildungseinrichtung 3 sind durch einen Computer imptementiert, wobei die Steuersignalbildungseinrichtung über den Impulsgeber auch unmittelbar Positionsveränderungen der fahrbaren Vorrichtung erfassen und auswerten kann.

Bei dem Antriebsmotor 1 handelt es sich um einen fremderregten vielpoligen Drehstrom-Synchronmotor, der im Stern verschaltet ist. Dieser Motor kann selbst als Impulsgeber der Geschwindigkeitsmeßeinrichtung 4 dienen, wobei z.B. am Stempunkt entsprechende Spannungsimpulse, die durch Induktion an den Erregerpolen gebildet werden, abgreifbar sind.

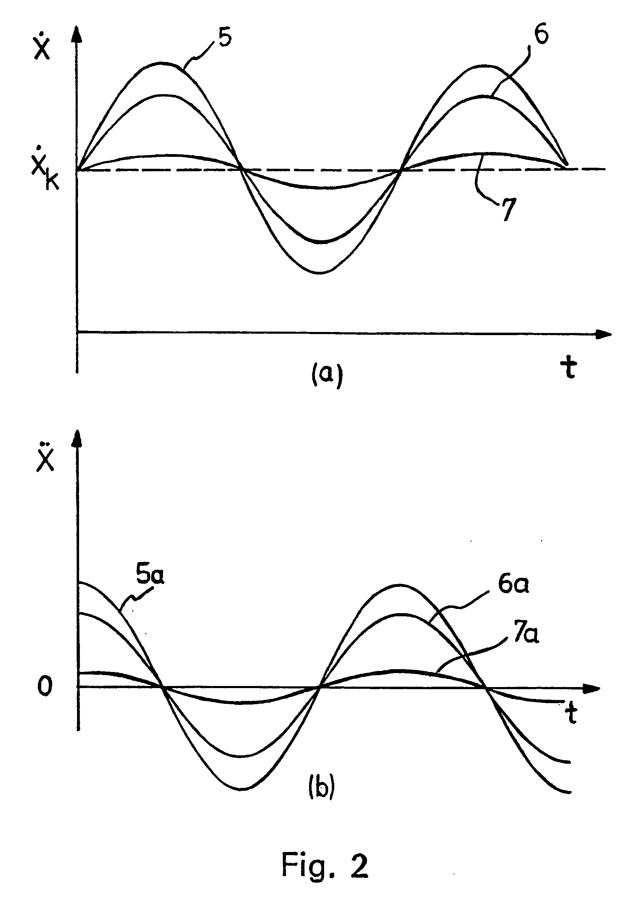

Es wird nun auf Fig. 2 Bezug genommen, wo in Teilfigur a Geschwindigkeitsprofile eines Fahrrades oder einer durch eine Person gezogenen oder geschobenen fahrbaren Vorrichtung, wie z.B. eines Golfkarrens, gezeigt sind. In dem betreffenden Beispiel weisen die Geschwindigkeitsprofile eine konstante Geschwindigkeitskomponente x_{K} auf, der eine periodische Komponente überlagert ist. Das heißt, die fahrbare Vorrichtung bewegt sich mit konstanter mittlerer Geschwindigkeit x_{K}.

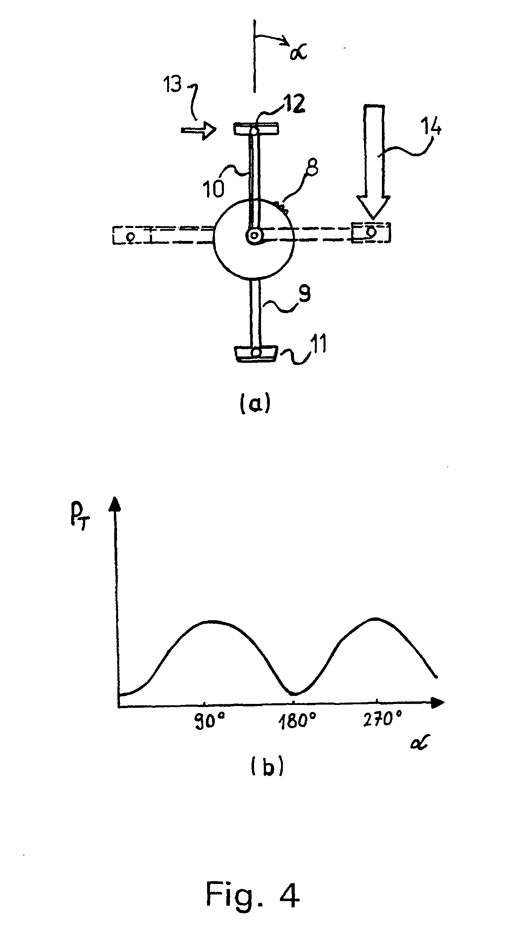

Aus Fig. 4 geht hervor, wie sich z.B. bei einem mit konstanter mittlerer Geschwindigkeit unter Muskelkraftantrieb bewegten Fahrrad Geschwindigkeitsprofile, wie sie in Fig. 2a gezeigt sind, ergeben.

Fig. 4a zeigt mit einem Kettenantriebszahnrad 8 verbundene Fahrradtretkurbeln 9 und 10 mit je einem Pedal 11 bzw. 12. Bei 13 ist ein Pfeil gezeigt, durch den eine in vertikaler Stellung der Tretkurbeln ausgeübte tangentiale Antriebskraft angedeutet ist. Ein Pfeil 14 deutet auf eine tangentiale Antriebskraft in horizontaler Stellung der Tretkurbeln hin. Wie die unterschiedliche Größe der Pfeile 13 und 14 verdeutlicht, wird in der vertikalen Tretkurbelstellung eine wesentlich geringere tangentiale Antriebskraft P_{T} als in der horizontalen Drehstellung der Tretkurbeln 9 und 10 ausgeübt, wobei die tangentiale Antriebskraft P_{T} in Abhängigkeit vom Drehwinkel α des Kurbelantriebszahnrads 8 etwa den in Fig. 4b gezeigten periodischen Verlauf aufweist.

Entsprechend diesem periodischen Verlauf der tangentialen Antriebskraft P_{T} kommt es zu den in Fig. 2b gezeigten Beschleunigungsprofilen 5a bis 7a des über die Tretkurbeln 9 und 10 angetriebenen Fahrrades. Durch Zeitintegration ergeben sich die Geschwindigkeitsprofile 5 bis 7 von Fig. 2a.

Wegen der Proportionalität zwischen Antriebskraft und Beschleunigung sind die Amplituden der periodischen Profilkomponenten umso größer, je größer im Mittel die tangentiale Antriebskraft gemäß Fig. 4b ist. Liegt keine Muskelantriebslast an, indem der Fahrradfahrer nicht oder nur leerlaufend tritt, so verschwindet die periodische Komponente des Geschwindigkeitsprofils.

Bei Antrieb einer fahrbaren Vorrichtung über eine Laufbewegung unter Ausübung einer Zug- oder Schubkraft ergeben sich durch die variierenden Kraftübertragungsverhältnisse bei der Schreitbewegung den Profilen von Fig. 2 ähnliche Profile. Auch die Amplituden dieser Profile wachsen mit zunehmender mittlerer Muskelantriebslast an, und die periodische Profilkomponente verschwindet, wenn z.B. eine Zugstange eines Golfwagens ohne Übertragung einer Zugkraft oder (bremsenden) Schubkraft nur gehalten wird.

Die in Fig. 1 gezeigte Steuersignalbildungseinrichtung 3 enthält in dem gezeigten Ausführungsbeispiel eine Differentationseinrichtung. durch welche aus den in Fig. 2a gezeigten Geschwindigkeitsprofilen die in Fig. 2b gezeigten Beschleunigungsprofile berechnet werden können.

Die in Fig. 2 gezeigten Profile können sich z.B. bei einer Bewegung unter Überwindung einer konstanten Steigung oder/und einer Bewegung, bei der die Antriebskraft und ein Reibungswiderstand, insbsondere Luftreibungswiderstand, im Gleichgewicht sind, ergeben.

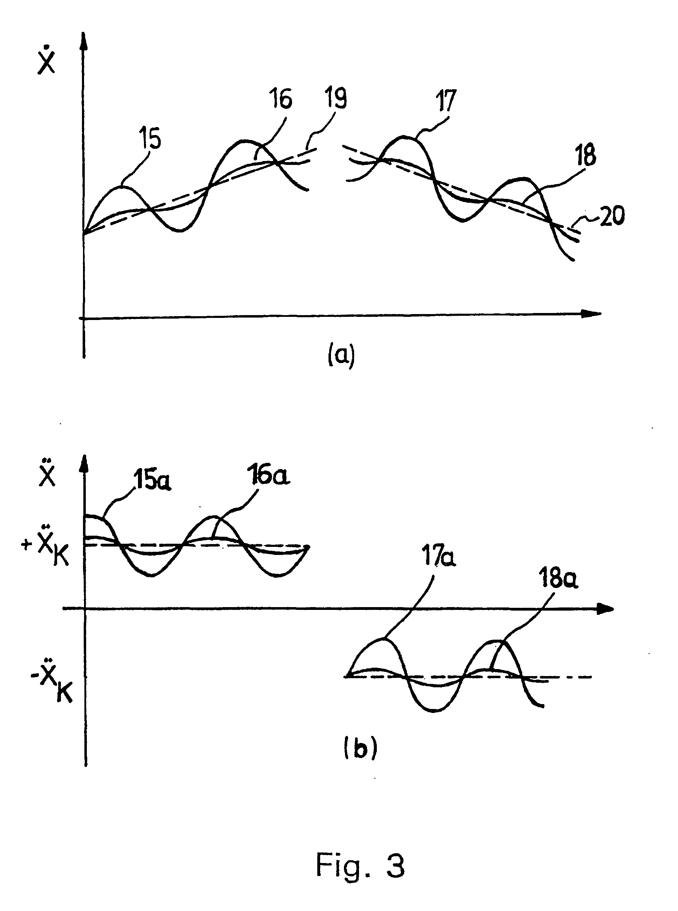

Es wird nun auf Fig. 3 Bezug genommen, wo Geschwindigkeits- und Beschleunigungsprofile für eine (im Mittel) gleichmäßig beschleunigte und verzögerte Bewegung gezeigt sind.

Auch im Falle einer solchen beschleunigten Bewegung mit konstanter Grundbeschleunigung x_{K} ergeben sich Geschwindigkeitsprofile 15,16 und Beschleunigungsprofile 15a,16a mit jeweils einer periodischen Komponente, die einer gleichmäßig ansteigenden mittleren Geschwindigkeit bzw. der konstanten Beschleunigung x_{K} überlagert ist.

Bei 17 und 18 sind in Fig. 3a Geschwindigkeitsprofile gezeigt, die sich für eine gleichmäßig verzögerte Bewegung ergeben. Eine solche Bewegung könnte durch eine abgebremste Laufbewegung einer Person unter Abbremsung einer vorher durch die Person gezogenen fahrbaren Vorrichtung erzeugt werden. Mit 17a und 18a sind die den Geschwindigkeitsprofilen 17 und 18 entsprechenden Beschleunigungsprofile bezeichnet, deren periodischer Komponente einer konstanten negativen Beschleunigung -x_{K} überlagert ist.

Im folgenden wird die Funktionsweise der anhand der Fig. 1 bis 4 erläuterten Steuerung beschrieben.

Während der Bewegung einer die Steuereinrichtungen von Fig. 1 enthaltenden fahrbaren Vorrichtung liefert die Einrichtung 4 für die Ermittlung von Geschwindigkeiten ständig abgetastete Geschwindigkeitswerte gemäß den Profilen von Fig. 2a oder/und 3a an die Signalbildungseinrichtung 3.

In dem gezeigten Ausführungsbeispiel wertet die Signalbildungseinrichtung 3 diese Profile aus, indem sie die Amplituden der periodischen Komponente der Geschwindigkeitsprofile oder/und durch Differenzieren ermittelter Beschleunigungsprofile mit einem gespeicherten Amplitudenwert vergleicht, der einer durch Muskelkraft aufzubringenden Grundlast des Antriebs der fahrbaren Vorrichtung entspricht.

Die Signalbildungseinrichtung 3 erzeugt nun Steuersignale derart, daß die Amplitude der periodischen Komponente der abgetasteten Geschwindigkeits- oder Beschleunigungsprofile auf die gespeicherte Amplitude eingeregelt wird. Das heißt, die Motorantriebskraft wird unter Entlastung der anliegenden Muskelantriebskraft so erhöht oder verringert, daß die ausgeübte Muskelantriebskraft einem Geschwindigkeitsprofil, dessen Amplitude dem gespeicherten Amplitudenwert gleich ist, entspricht. Im Rahmen dieser Einregelung könnten auch Mittelwerte x_{K}, -x_{K} zur Auswertung einbezogen werden, um z.B. zu bestimmen, ob eine im Mittel beschleunigte oder verzögerte Bewegung vorliegt. Bei negativer Beschleunigung wird durch den Motor dann von vornherein eine Bremskraft ausgeübt.

Im Unterschied zu einer Einregelung der Amplitude, also von Einzelwerten des Profils, könnte auch eine Einregelung unter Zugrundelegung weiterer Profilwerte oder eine Einregelung auf gespeicherte Geschwindigkeits- und/oder Beschleunigungsprofile insgesamt, die einer vorbestimmten, durch den Muskelantrieb aufzubringenden Grundlast entsprechen, erfolgen.

Anstelle einer Einregelung auf vorgegebene Amplituden oder Profile könnte auch eine Motorsteuerung derart erfolgen, daß eine ermittelte periodische Komponente, die das Anliegen einer Muskelantriebskraft anzeigt, zum Verschwinden gebracht wird. Das heißt, in diesem Fall übernimmt nach anfänglichem oder zwischenzeitlichem Muskelkraftantrieb der Motor die volle Antriebsleistung.

Eine dritte Möglichkeit besteht darin, den Motor so zu steuern, daß eine gemessene Amplitude um einen bestimmten Prozentsatz verringert wird, so daß gewährleistet ist, daß der Motor in jeder Antriebssituation einen festliegenden, ggf. einstellbaren prozentualen Anteil der insgesamt aufgewendeten Antriebsleistung übernimmt. Hierzu könnte die Steuerung mit einer Einrichtung versehen sein, welche die momentane Motorantriebskraft anhand der kinematischen Auswertung der Bewegung der angetriebenen Vorrichtung oder des Motorantriebs selbst und anhand einer Erfassung aller über dem Motorantrieb liegenden Spannungen und/oder diesen durchfließenden Strömen ermittelt.

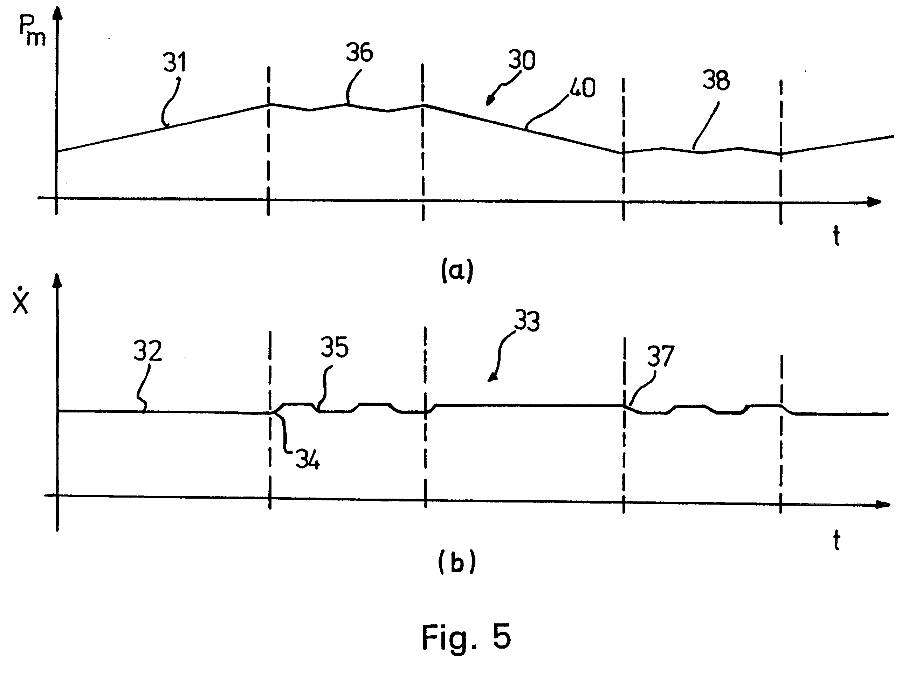

Es wird nun Fig. 5 Bezug genommen, wo in Teilfigur a mit dem Bezugszeichen 30 ein Zeitfunktion der Motorantriebskraft Pₘ bezeichnet ist. In einem Betriebsmodus der Steuerung ist vorgesehen, daß die Antriebskraft Pₘ wie bisher in einem Abschnitt 31 der genannten Zeiffunktion, allmählich ansteigt.

Legt man ein Verhaltensmodell zugrunde, nach welchem ein Benutzer der fahrbaren Vorrichtung die Muskelantriebskraft in gleichem Maße verringert, wie die Motorantriebskraft ansteigt, so lange er eine stärkere Unterstützung durch den Motorantrieb wünscht, so bleibt die Geschwindigkeit x entsprechend einem Abschnitt 32 einer in Teilfigur 5b dargestellten Geschwindigkeits-Zeit-Funktion 33 konstant.

Verringert der Benutzer seine Antriebskraft nicht mehr im Maße des Anstiegs der Motorantriebskraft, so kommt es zu einer Beschleunigung der Bewegung an der Stelle 34. Die Registrierung dieser Beschleunigung führt in dem genannten Betriebsmodus dazu, daß sich die Antriebskraft Pₘ des Antriebsmotors nun allmählich verringert. Da jedoch der Benutzer eine zum Zeitpunkt der Beschleunigung anliegende Motorantriebskraft als Antriebsunterstützung wünscht, wird er bei einem Abfall der Motorantriebskraft nicht lange die Muskelantriebskraft entsprechend dem Abfall erhöhen, so daß es bei 35 zu einer negativen Beschleunigung kommt, die nun Anlaß für ein Wiederansteigen der Motorantriebskraft ist. So bleibt es in der Phase 36 der Antriebskraft-Zeit-Funktion bei einem im Mittel konstanten Betrag der aufgewendeten Muskelantriebskraft. In einer darauf folgenden Phase 40 erhöht der Benutzer entsprechend dem Abfall der Antriebskraft Pₘ seine Antriebskraft bis zum Beginn einer Phase 38 der Antriebskraft-Zeit-Funktion. Hier erfolgt diese Erhöhung nicht mehr, so daß es bei 37 zu einer negativen Beschleunigung kommt. In der Phase 38 bleibt wie in der Phase 36 die aufgewendete Muskelantriebskraft wieder annähernd konstant, indem der Benutzer aufeinanderfolgenden Änderungen der Anstiegsrichtung der Motorantriebskraft nur für kurze Zeiten entsprechende Änderungen der Muskelantriebskraft entgegensetzt. Auf die beschriebene Weise stellt sich der Motorantrieb automatisch auf eine im Zeitablauf unterschiedliche, vom Benutzer gewünschte Muskelkraftantriebsgrundlast ein.

## Patentansprüche

1. Steuerung für einen Motorantrieb einer durch Muskelantriebskraft sowie unterstützend durch den Motorantrieb bewegbaren, insbesondere fahrbaren Vorrichtung, mit einer kinematische Größen der bewegten Vorrichtung erfassenden, Motorantriebssteuersignale erzeugenden Einrichtung (3,4) zur Einstellung des Ausmaßes der Unterstützung des Muskelkraftantriebs durch den Motorantrieb basierend ausschließlich auf den erfaßten kinematischen Größen,
**dadurch gekennzeichnet,**
**daß** sich die kinematischen Größen auf eine Bewegungskomponente beziehen, die auf einer dem Muskelkraftantrieb immanenten periodischen Schwankung der ausgeübten Muskelantriebskraft oder/und einer Änderung der ausgeübten Muskelantriebskraft in Reaktion auf eine bestimmte Änderung der Motorantriebskraft oder Motorantriebsgeschwindigkeit beruht.

2. Steuerung nach Anspruch 1,
**dadurch gekennzeichnet,**
**daß** die genannte Einrichtung (3,4) zur Erfassung von Zeitfunktionen (5-7:15-18) der kinematischen Größen vorgesehen ist.

3. Steuerung nach Anspruch 2,
**dadurch gekennzeichnet,**
**daß** die genannte Einrichtung (3,4) eine die Zeitfunktionen auswertende Analyseeinrichtung aufweist.

4. Steuerung nach Anspruch 3,
**dadurch gekennzeichnet,**
**daß** die Analyseeinrichtung eine Differentiationseinrichtung aufweist.

5. Steuerung nach einem der Ansprüche 1 bis 4,
**dadurch gekennzeichnet,**
**daß** die genannte Einrichtung zur Erfassung periodischer Zeitunktionen der Geschwindigkeit oder/und Beschleunigung vorgesehen ist.

6. Steuerung nach Anspruch 5,
**dadurch gekennzeichnet,**
**daß** die genannte Einrichtung (3,4) zur Erfassung der Amplitude der periodischen Zeitfunktionen vorgesehen ist.

7. Steuerung nach Anspruch 5 oder 6,
**dadurch gekennzeichnet,**
**daß** die genannte Einrichtung zum Vergleich der erfaßten Zeiffunktion mit einer vorbestimmten Zielfunktion, insbesondere zum Vergleich der erfaßten Amplitude mit einer Zielamplitude, und zur Einregelung der erfaßten Zeitfunktion bzw. Amplitude auf die Zielfunktion bzw. Zielamplitude durch entsprechende Änderung der Motorantriebskraft vorgesehen ist.

8. Steuerung nach einem der Ansprüche 5 bis 7,
**dadurch gekennzeichnet,**
**daß** die genannte Einrichtung ferner zur Erfassung der über die periodische Zeitfunktion gemittelten Geschwindigkeit (19,20) oder/und Beschleunigung vorgesehen ist.

9. Steuerung nach einem der Ansprüche 1 bis 8,
**dadurch gekennzeichnet,**
**daß** als gezielte Änderung der Motorantriebskraft bzw. -geschwindigkeit ein allmählicher Anstieg oder ein allmählicher Abfall der Motorantriebskraft bzw. -geschwindigkeit und die genannte Einrichtung zum Umschalten von Anstieg auf Abfall bei Erfassung einer Verzögerung und von Abfall auf Anstieg bei Erfassung einer Beschleunigung der Vorrichtung vorgesehen ist.

10. Steuerung nach einem der Ansprüche 1 bis 9,
**dadurch gekennzeichnet,**
**daß** ein vielpoliger Antriebsmotor als Drehwinkelimpulsgeber für eine Geschwindigkeitsmeßeinrichtung vorgesehen ist.

## Claims

1. Control for a motor drive of an apparatus which can be moved, in particular driven, by muscle driving force and, in a supporting fashion, by the motor drive, having a device (3, 4), which detects kinematic variables of the moved apparatus and generates motor drive control signals, for setting the extent of the support of the muscle force drive by the motor drive in a fashion based exclusively on the detected kinematic variables, **characterized in that** the kinematic variables relate to a movement component which is based on a periodic fluctuation, inherent to the muscle force drive, in the exerted muscle driving force or/and a change in the exerted muscle driving force in reaction to a specific change in the motor driving force or motor driving speed.

2. Control according to Claim 1, **characterized in that** the said device (3, 4) is provided for detecting time functions (5-7;15-18) of the kinematic variables.

3. Control according to Claim 2, **characterized in that** the said device (3, 4) has an analysis device which analyses the time functions.

4. Control according to Claim 3, **characterized in that** the analysis device has a differentiation device.

5. Control according to one of Claims 1 to 4, **characterized in that** the said device is provided for detecting periodic time functions of the speed or/and acceleration.

6. Control according to Claim 5, **characterized in that** the said device (3, 4) is provided for detecting the amplitude of the periodic time functions.

7. Control according to Claim 5 or 6, **characterized in that** the said device is provided for comparing the detected time function with a predetermined target function, in particular for comparing the detected amplitude with a target amplitude, and for adjusting the detected time function and/or amplitude to the target function and/or target amplitude by appropriately changing the motor driving force.

8. Control according to one of Claims 5 to 7, **characterized in that** the said device is further provided for detecting the speed (19, 20) and/or acceleration averaged over the periodic time function.

9. Control according to one of Claims 1 to 8, **characterized in that** a gradual rise or a gradual fall in the motor driving force or motor driving speed is provided as a specific change in the motor driving force or motor driving speed, and the said device is provided for switching over from rise to fall when detecting a delay, and from fall to rise when detecting an acceleration, of the apparatus.

10. Control according to one of Claims 1 to 9, **characterized in that** a multi-pole drive motor is provided as rotation angle pulse generator for a tachometer.

## Revendications

1. Commande pour l'entraînement à moteur d'un dispositif mis en mouvement, en particulier en roulement, par la force musculaire et avec assistance par l'entraînement à moteur, comportant un système (3, 4) détectant des grandeurs cinématiques du dispositif mobile et émettant des signaux de commande pour l'entraînement à moteur, afin de régler la proportion de l'assistance de l'entraînement à force musculaire par l'entraînement à moteur en se basant exclusivement sur les grandeurs cinématiques détectées, **caractérisée en ce que** les grandeurs cinématiques se rapportent à une composante de mouvement qui se base sur une fluctuation, périodique et immanente à l'entraînement par force musculaire, de la force musculaire exercée et/ou à une modification de la force musculaire exercée en réaction à une modification déterminée de la force motrice ou de la vitesse d'entraînement du moteur.

2. Commande selon la revendication 1, **caractérisée en ce que** ledit système (3, 4) est prévu pour détecter des fonctions temporelles (5 - 7 ; 15 - 18) des grandeurs cinématiques.

3. Commande selon la revendication 2, **caractérisée en ce que** ledit système (3, 4) comprend un dispositif d'analyse qui évalue les fonctions temporelles.

4. Commande selon la revendication 3, **caractérisée en ce que** le dispositif d'analyse comprend un dispositif de différentiation.

5. Commande selon l'une quelconque des revendications 1 à 4, **caractérisée en ce que** ledit système est prévu pour détecter des fonctions temporelles périodiques de la vitesse et/ou de l'accélération.

6. Commande selon la revendication 5, **caractérisée en ce que** ledit système (3, 4) est prévu pour détecter l'amplitude des fonctions temporelles périodiques.

7. Commande selon l'une ou l'autre des revendications 5 et 6, **caractérisée en ce que** ledit système est prévu pour comparer la fonction temporelle détectée avec une fonction cible prédéterminée, en particulier pour comparer l'amplitude détectée avec une amplitude cible, et pour régler la fonction temporelle détectée ou l'amplitude par rapport à la fonction cible ou à l'amplitude cible par une modification correspondante de la force motrice.

8. Commande selon l'une quelconque des revendications 5 à 7, **caractérisée en ce que** ledit système est prévu en outre pour détecter la vitesse (19, 20) et/ou l'accélération moyennée via la fonction temporelle périodique.

9. Commande selon l'une quelconque des revendications 1 à 8, **caractérisée en ce qu'**il est prévu, à titre de modification ciblée de la force motrice ou de la vitesse du moteur, une augmentation graduel ou une réduction graduel de la force ou de la vitesse motrice, et **en ce que** ledit système est prévu pour inverser de l'augmentation à la réduction lors de la détection d'une décélération et de la réduction à l'augmentation lors de la détection d'une accélération du dispositif.

10. Commande selon l'une quelconque des revendications 1 à 9, **caractérisée en ce qu'**il est prévu un moteur d'entraînement multipolaire à titre d'émetteur d'impulsion d'angle de rotation pour un dispositif de mesure de vitesse.
